# EUROPÄISCHE PATENTSCHRIFT

(11) **EP 0 495 522 B1**
(45) Veröffentlichungstag und Bekanntmachung des Hinweises auf die Patenterteilung: **20.12.1995**
(21) Anmeldenummer: 92100770.4
(22) Anmeldetag: 17.01.1992
(51) Int. Cl.: B02C 19/14

(54) **Flaschenzerkleinerungsvorrichtung**
Bottle breaking device
Broyeur pour bouteilles

(30) Priorität: 17.01.1991 DE 9100530 U
(43) Veröffentlichungstag der Anmeldung: 22.07.1992
(73) Patentinhaber: FIRMA ULRICH HEIN, D-59427 Unna (DE)
(72) Erfinder: Hein, Michael, D-4750 Unna-Köngsborn (DE); Hein, Axel, D-4750 Unna-Köngsborn (DE)
(74) Vertreter: Betten & Resch

(56) Entgegenhaltungen:
- EP-A- 0 376 220
- DE-A- 2 544 963
- US-A- 4 195 562
- US-A- 4 489 896
- US-A- 4 871 118

## Beschreibung

Die Erfindung betrifft eine Zerkleinerungsvorrichtung für Behältnisse, wie insbesondere Flaschen, aus Materialien einschließlich und insbesondere Glas, mit einem Gehäuse, einer Einführöffnung in das Gehäuse für die zu zerkleinernden Behältnisse, mindestens einem Anschlag innerhalb des Gehäuses, um das zu zerkleinernde Behältnis zum Zwecke des Zerkleinerns in Position zu halten, und mindestens einem im Gehäuse drehbar angeordneten, motorisch antreibbaren Werkzeug, um das Behältnis zu zerkleinern.

Eine solche Zerkleinerungsvorrichtung für Kunststoffbehältnisse ist aus US-A-4,871,118 bekannt.

Bei Abfüllbetrieben wie Brauereien, Weinkellereien, Sektherstellern, Herstellern von Limonaden, Säften, Mineralwasser u.dgl. fallen regelmäßig beispielsweise aufgrund einer Beschädigung aussortierte Flaschen an, welche zerkleinert werden müssen. Dies geschah in der Regel dadurch, daß solche Flaschen von Hand in hierzu bereitgestellte Container geworfen wurden, wobei diese Art der Entsorgung jedoch erhebliche Nachteile mitsichbrachte, nachdem dieses Zertrümmern der Glasflaschen sehr lärmintensiv und aufgrund der entstehenden Glassplitter auch unfallträchtig war.

Aus der DE-A-39 02 487 ist eine Zerkleinerungsvorrichtung für insbesondere Glasflaschen bekannt, welche ein Gehäuse umfaßt, ein oder mehrere, in das Gehäuse hineinragende Führungsschächte für die zu zerkleinernden Flaschen und einen im Gehäuse drehbar gelagerten, motorisch angetriebenen Werkzeughalter mit sich radial erstreckenden Werkzeugen in Form von Stangen, welche bei der Rotation in das Innere der Führungsschächte eintreten und hierdurch die Flaschen zertrümmern.

Ausgehend von diesem bekannten Stand der Technik liegt der Erfindung die Aufgabe zugrunde, die aus der genannten DE-A-39 02 487 bekannte Zerkleinerungsvorrichtung weiter zu optimieren. Einerseits soll der Aufbau der Zerkleinerungsvorrichtung vereinfacht werden und andererseits soll die mechanische Stabilität vergrößert werden. Schließlich soll auch die Funktion weiter verbessert werden.

Die erfindungsgemäße Lösung besteht im wesentlichen darin, daß innerhalb des Gehäuses ein den mindestens einen Anschlag bildender Rost angeordnet ist, wobei der Rost insgesamt winkelig ausgebildet ist und einen ersten Rostabschnitt umfaßt, der von der Einführöffnung kommend schräg nach unten geneigt ist, und einen zweiten Rostabschnitt, der sich an den ersten Rostabschnitt unter einem Winkel von vorzugsweise etwa 90° schräg nach oben erstreckend anschließt. Weiterhin kann ein dritter Rostabschnitt vorgesehen sein, der sich an den zweiten Rostabschnitt anschließt und zu der der Einführöffnung gegenüberliegenden Seitenwandung des Gehäuses erstreckt. Der Rost ist mit mindestens zwei gegenüberliegenden Seitenwandungen des Gehäuses verbunden, vorzugsweise mit allen vier Seitenwandungen, und zusätzlich können die Roststäbe als Montagehilfe mit unteren Stützbeinen versehen sein.

Nachdem, wie auch beim Stand der Technik, in der Regel mehrere Werkzeuge nebeneinanderliegend vorgesehen sein werden, um mehrere nebeneinanderliegende Flaschen gleichzeitig zu zerkleinern, kann aufgrund der erfindungsgemäßen Gitterroststruktur die beim Stand der Technik vorgesehene, vergleichsweise kompliziertere Lösung mit mehreren, nebeneinanderliegenden, in das Gehäuse hineinragenden Führungsschächten vermieden werden. Die Flaschen können sowohl parallel als auch quer zu den Gitterstäben liegend zerkleinert werden.

Bei ihrer Umdrehung durchdringen die Werkzeuge den Rost zumindest teilweise, so daß das Material zwangsweise durch den Rost hindurchgedrückt wird, wodurch sich gute Zerkleinerungsergebnisse mit folglich hoher Packungsdichte des zerkleinerten Materials ergeben. Besonders bevorzugt ist hierbei, daß zwischen Werkzeug und benachbarten Roststäben beidseitig ein Spalt von kleiner als 10 mm vorhanden ist, der vorzugsweise zwischen 3 und 5 mm liegen sollte.

Der zum Zerkleinern der Flaschen erforderliche Kraftaufwand und somit die erforderliche Motorleistung der Zerkleinerungsvorrichtung ist dann besonders klein, wenn die sich radial von der Werkzeug-Drehachse erstreckenden Werkzeuge derart ausgebildet sind, daß sie an den in Anschlagsposition gehaltenen Flaschen zuerst an deren Bauch angreifen; hierzu kann in bevorzugter Weiterbildung der Erfindung das Werkzeug an seiner in Drehrichtung gesehen vorderen Seite derart gekrümmt sein, daß mit zunehmender Drehung der Angriffspunkt radial nach außen wandert. Die Einleitung des Zerkleinerungsvorgangs der Flasche am Flaschenbauch erfordert einen vergleichsweise geringen Kraftaufwand, ebenso wie aufgrund des anfänglich kurzen radialen Abstands des Angriffspunkts von der Drehachse bei einem bestimmten Drehmoment hohe Zerkleinerungskräfte zur Verfügung stehen.

Weitere vorteilhafte Merkmale der Erfindung ergeben sich aus den Unteransprüchen sowie aus der nachfolgenden Beschreibung, in der ein bevorzugtes Ausführungsbeispiel der Erfindung anhand der Zeichnung näher erläutert wird. In der Zeichnung zeigen:
- Fig. 1: einen vertikalen Schnitt durch eine erfindungsgemäße Zerkleinerungsvorrichtung, senkrecht zur Werkzeugachse, und
- Fig. 2: einen vertikalen Schnitt durch die Zerkleinerungsvorrichtung gemäß Fig. 1 senkrecht zur Zeichenebene gemäß Fig. 1.

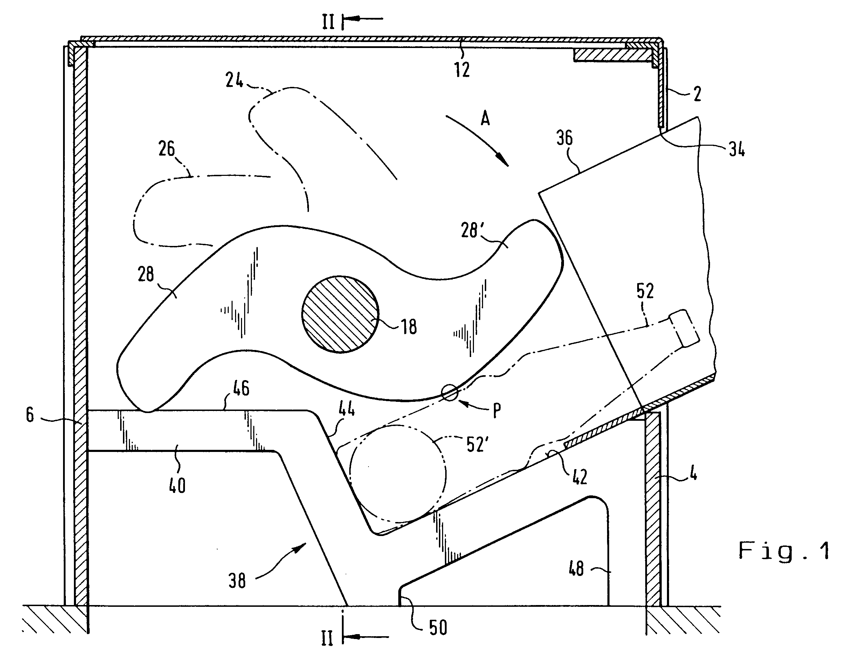

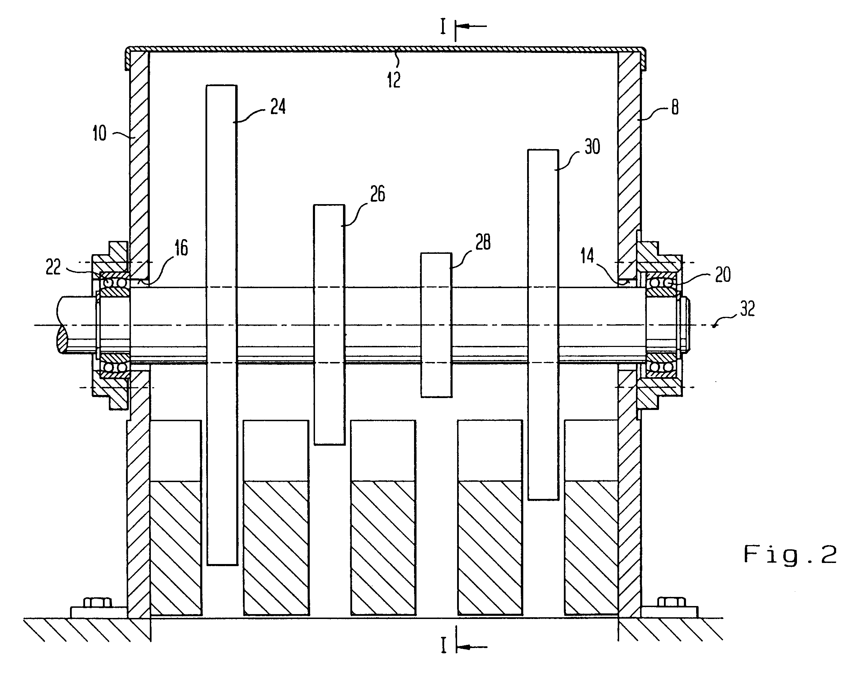

Die in den Fig. 1 und 2 dargestellte Zerkleinerungsvorrichtung umfaßt ein Gehäuse 2, welches vier Seitenwände 4, 6, 8 und 10 und eine abnehmbare Abdeckung 12 umfaßt. An den Seitenwänden 8, 10 sind Durchgänge 14, 16 ausgebildet, durch die hindurch sich eine Welle 18 erstreckt, die über an den Seitenwänden 8, 10 gehaltene Kugellager 20, 22 drehbar gelagert ist und mittels eines nicht näher dargestellten Motors antreibbar ist. An der Welle 18 sind vier Doppelwerkzeuge 24 bis 30 angeschweißt, die bezüglich der Achse 32 der Welle 18 axialsymmetrisch ausgebildet sind und im übrigen jeweils identisch ausgebildet sind und gegeneinander lediglich in radialer Richtung versetzt sind derart, daß sie untereinander einen Winkel von 45° · N einschließen, wobei N eine gerade Zahl zwischen 1 und 3 ist. In Fig. 1 ist lediglich das Doppelwerkzeug 28 dargestellt, die Doppelwerkzeuge 26 und 24 sind nur gestrichelt angedeutet.

In der Seitenwand 4 des Gehäuses 2 ist eine Einführöffnung 34 ausgebildet, durch die hindurch sich das Ende eines Führungsschachtes 36 erstreckt, über den die zu zerkleinernden Behältnisse dem Inneren der Zerkleinerungsvorrichtung zugeführt werden.

Etwa im unteren Drittel des Gehäuses 2 ist ein insgesamt mit der Bezugsziffer 38 bezeichneter Rost vorgesehen, der im Falle des vorliegenden Ausführungsbeispiels aus fünf parallelen, senkrecht zur Achse 32 verlaufenden Rostprofilstäben 40 besteht. Die Rostprofilstäbe 40 definieren einen ersten Rostabschnitt 42, der von der Einführöffnung 34 kommend nach unten entsprechend der Neigung des Führungsschachts 36 geneigt ist, sowie einen sich hieran anschließenden, zweiten Rostabschnitt 44, der sich vom ersten Rostabschnitt 42 unter einem rechten Winkel schräg nach oben erstreckt. Hieran schließt sich ein dritter Rostabschnitt 46 an, der sich horizontal erstreckt und an der Seitenwand 6 des Gehäuses 2 endet, wo er angeschweißt ist. Das der Seitenwand 4 zugewandte Ende des Rostabschnitts 42 ist ebenfalls an dieser Seitenwand 4 angeschweißt. Zusätzlich sind am Rost 38 im Bereich der Seitenwand 4 sowie in etwa mittig im Übergangsbereich zwischen Rostabschnitt 42 und Rostabschnitt 44 Beine 48 bzw. 50 als Montagehilfen ausgebildet, die in der durch die Unterkanten der Seitenwände 4 bis 10 definierten Bodenebene des Gehäuses 2 enden. Das Gehäuse ist im übrigen, wie aus den Figuren ersichtlich, nach unten offen, so daß zerkleinertes Flaschenmaterial nach unten in einen Auffangbehälter o. dgl. fallen kann.

Die über den Führungsschacht 36 der Zerkleinerungsvorrichtung zugeleiteten Flaschen o. dgl. rutschen auf dem ersten Rostabschnitt 42 nach unten, bis sie am zweiten Rostabschnitt 44 anschlagen. In dieser Position ist eine Flasche 52 gestrichelt dargestellt. Es versteht sich, daß die Einführöffnung 34 ebenso wie der Führungsschacht 36 etwa ebenso breit ist wie die Seitenwand 4 des Gehäuses 2, so daß mehrere Flaschen nebeneinander in das Innere des Gehäuses 2 gelangen können und auf dem Rostabschnitt 42 zu liegen kommen können; im Falle des Ausführungsbeispiels haben vier Flaschen nebeneinander Platz, entsprechend den vier Längsrillen des Rostes bzw. den vier, in Axialrichtung versetzten Doppelwerkzeugen 24 bis 30.

Wie in Fig. 1 skizziert, ist es jedoch nicht erforderlich, daß die Flaschen 52 parallel zu den Roststäben bzw. zu der Bewegungsebene der Werkzeuge ausgerichtet sind; sie können auch senkrecht hierzu zu liegen kommen, wie dies durch die Bezugsziffer 52' angedeutet ist. Auch in diesem Fall werden die Flaschen ordnungsgemäß zerkleinert. Selbst wenn die Flaschen ungeordnet bzw. ungesichtet liegen, ist eine Zerkleinerung gewährleistet.

Aus Fig. 1 ist deutlich erkennbar, daß die vorauseilende Kante 54 des Werkzeugs 28' des Doppelwerkzeugs 28 - ebenso wie die vorauseilenden Kanten sämtlicher übriger Werkzeuge - derart gekrümmt ausgebildet ist, daß sie an einem Punkt P mit der Flasche 52 in Eingriff kommt, der im Bereich des Flaschenbauchs gelegen ist. Bei Kraftanwendung im Bereich des Flaschenbauchs kann die Flasche 52 besonders leicht zertrümmert werden. Bei weiterer Drehung des Werkzeugs 28' in Drehrichtung A wird die Flasche 52 zunehmend in Richtung zum Flaschenhals hin zerkleinert, wobei der Angriffspunkt des Werkzeugs sich zunehmend radial nach außen verlagert, und schließlich wird das zertrümmerte Scherbenmaterial mittels des Werkzeugs 28' zwischen den Roststäben hindurch unter weiterer Zerkleinerung nach unten gedrückt. Der seitliche Abstand der Werkzeuge zu den Roststäben beträgt im Falle des beschriebenen Ausführungsbeispiels 4 mm.

Es sei an dieser Stelle angemerkt, daß es sich versteht, daß die Größe der Zerkleinerungsvorrichtung sowie die Formgebung des Rostes, der Werkzeuge u. dgl. den jeweils speziell zu zerkleinernden Flaschenformen angepaßt werden kann und anzupassen ist, nachdem in der Regel an einer Anlage immer nur eine Gattung von Flaschen verwendet wird.

Die erfindungsgemäße Zerkleinerungsvorrichtung für Behältnisse kann nicht nur für Glasflaschen, sondern auch für andere Behältnisse, beispielsweise solche aus Kunststoff oder insbesondere auch für Blechbüchsen verwendet werden. Gegebenenfalls ist ein einfacher Austausch der Werkzeuge dadurch möglich, daß die Welle samt Werkzeugen nach Abnahme des Gehäusedeckels 12 durch entsprechende, nach oben verlaufende Ausnehmungen in den Seitenwänden 8, 10 nach oben entnommen werden kann und durch eine Welle mit anderen Werkzeugen ersetzt werden kann.

## Patentansprüche

1. Zerkleinerungsvorrichtung für Behältnisse (52), wie insbesondere Flaschen, aus Materialien einschließlich und insbesondere Glas, mit einem Gehäuse (2), einer Einführöffnung (34) im Gehäuse (2) für die zu zerkleinernden Behältnisse (52), mindestens einem Anschlag innerhalb des Gehäuses (2), um das zu zerkleinernde Behältnis (52) zum Zwecke des Zerkleinerns in Position zu halten, und mindestens einem im Gehäuse (2) drehbar angeordneten, motorisch antreibbaren Werkzeug (24 - 30), um das Behältnis (52) zu zerkleinern, wobei innerhalb des Gehäuses (2) ein den mindestens einen Anschlag bildender Rost (38) angeordnet ist,
dadurch gekennzeichnet,
daß der Rost (38) insgesamt winkelförmig ausgebildet ist und einen ersten Rostabschnitt (42) umfaßt, der von der Einführöffnung (34) kommend schräg nach unten geneigt ist derart, daß die über die Einführöffnung zugeleiteten Behältnisse über diesen Rostabschnitt nach unten rutschen, und einen zweiten Rostabschnitt (44), der sich an den ersten Rostabschnitt (42) zur Bildung des Anschlags schräg nach oben erstreckend anschließt.

2. Zerkleinerungsvorrichtung nach Anspruch 1, dadurch gekennzeichnet, daß der zweite Rostabschnitt (44) mit dem ersten Rostabschnitt (42) einen Winkel von etwa 90° bildet.

3. Zerkleinerungsvorrichtung nach Anspruch 1 oder 2, dadurch gekennzeichnet, daß die Drehachse (32) des Werkzeugs (24 bis 30) im wesentlichen oberhalb des Rosts (38) angeordnet ist.

4. Zerkleinerungsvorrichtung nach einem der vorhergehenden Ansprüche, dadurch gekennzeichnet, daß der Rost (38) zumindest mit zwei gegenüberliegenden Seitenwandungen (4, 6) des Gehäuses (2) verbunden ist.

5. Zerkleinerungsvorrichtung nach einem der Ansprüche 2 bis 4, dadurch gekennzeichnet, daß sich an den zweiten Rostabschnitt (44) ein dritter Rostabschnitt (46) anschließt, der sich zu der der Einführöffnung (34) gegenüberliegenden Seitenwandung (6) des Gehäuses (2) erstreckt.

6. Zerkleinerungsvorrichtung nach einem der vorhergehenden Ansprüche, dadurch gekennzeichnet, daß die Roststäbe (40) mit zusätzlichen unteren Beinen (48, 50) versehen sind.

7. Zerkleinerungsvorrichtung nach einem der vorhergehenden Ansprüche, dadurch gekennzeichnet, daß das mindestens eine Werkzeug (24 bis 30) bei seiner Rotation den Rost (38) zumindest teilweise durchdringt.

8. Zerkleinerungsvorrichtung nach einem der vorhergehenden Ansprüche, dadurch gekennzeichnet, daß das Werkzeug (24 bis 30) an seiner in Drehrichtung (A) gesehen vorderen Seite (54) derart gekrümmt ist, daß mit zunehmender Drehung der Angriffspunkt (P) zunehmend radial nach außen wandert.

9. Zerkleinerungsvorrichtung nach einem der vorhergehenden Ansprüche, dadurch gekennzeichnet, daß mehrere Werkzeuge (24 bis 30) auf einer gemeinsamen Drehachse (32) angeordnet sind.

10. Zerkleinerungsvorrichtung nach einem der vorhergehenden Ansprüche, dadurch gekennzeichnet, daß jedes Werkzeug als Doppelwerkzeug (24 bis 30) ausgebildet, indem es sich einstückig in radial entgegengesetzte Richtungen erstreckt.

11. Zerkleinerungsvorrichtung nach Anspruch 9 und 10, dadurch gekennzeichnet, daß vier Doppelwerkzeuge (24 bis 30) an einer gemeinsamen Welle (18) befestigt sind.

12. Zerkleinerungsvorrichtung nach einem der vorhergehenden Ansprüche, dadurch gekennzeichnet, daß die zwischen Werkzeug (24 bis 30) und benachbarten Roststäben (40) beidseitig vorhandene Spaltbreite kleiner als 10 mm ist, vorzugsweise zwischen 3 und 5 mm liegt.

## Claims

1. Crushing device for containers (52), such as in particular bottles, made of materials including and in particular glass, having a housing (2), an insertion opening (34) in the housing (2) for the containers (52) which are to be crushed, at least one stop inside the housing (2) for holding the container (52) to be crushed in position for crushing, and at least one motor-drivable tool (24 - 30) rotatably disposed in the housing (2) for crushing the container (52), a grate (38) which forms the at least one stop being disposed inside the housing (2), characterized in that the grate (38) as a whole is of an angular construction and comprises a first grate portion (42), which slopes obliquely downwards from the insertion opening (34) in such a way that the containers introduced through the insertion opening slide downwards over said grate portion, and a second grate portion (44) which adjoins the first grate portion (42) in an obliquely upward extending manner to form the stop.

2. Crushing device according to claim 1, characterized in that the second grate portion (44) with the first grate portion (42) forms an angle of around 90°.

3. Crushing device according to claim 1 or 2, characterized in that the axis of rotation (32) of the tool (24 to 30) is disposed substantially above the grate (38).

4. Crushing device according to one of the preceding claims, characterized in that the grate (38) is connected to at least two opposing side walls (4, 6) of the housing (2).

5. Crushing device according to one of claims 2 to 4, characterized in that adjoining the second grate portion (44) is a third grate portion (46) which extends to the side wall (6) of the housing (2) lying opposite to the insertion opening (34).

6. Crushing device according to one of the preceding claims, characterized in that the grate bars (40) are provided with additional bottom legs (48, 50).

7. Crushing device according to one of the preceding claims, characterized in that the at least one tool (24 to 30) upon its rotation at least partially penetrates the grate (38).

8. Crushing device according to one of the preceding claims, characterized in that the tool (24 to 30) at its - viewed in the direction of rotation (A) - front side (54) is curved in such a way that with increasing rotation the working point (P) travels progressively radially outwards.

9. Crushing device according to one of the preceding claims, characterized in that a plurality of tools (24 to 30) are disposed on a common axis of rotation (32).

10. Crushing device according to one of the preceding claims, characterized in that each tool takes the form of a double tool (24 to 30) in that it extends as a single piece in radially opposite directions.

11. Crushing device according to claims 9 and 10, characterized in that four double tools (24 to 30) are fastened to a common shaft (18).

12. Crushing device according to one of the preceding claims, characterized in that the gap width provided on either side between the tool (24 to 30) and adjacent grate bars (40) is less than 10 mm, being preferably between 3 and 5 mm.

## Revendications

1. Dispositif de broyage pour des récipients (52), tels qu'en particulier des bouteilles, en des matériaux, y compris, et en particulier en verre, avec un carter (2), une ouverture d'introduction (34) ménagée dans le carter (2) pour les récipients (52) à broyer, au moins une butée à l'intérieur du carter (2), afin de maintenir en position le récipient (52) à broyer, aux fins d'effectuer le broyage, et au moins un outil (24 à 30), disposé à rotation dans le carter (2), pouvant être entraîné par moteur, pour broyer le récipient (52), une grille (38) constituant la au moins une butée étant disposée à l'intérieur du carter (2),
caractérisé en ce que la grille (38) est réalisée globalement en forme angulaire et comprend un première section de grille (42), inclinée vers le bas, obliquement en venant de l'ouverture d'introduction (34), de manière que les récipients amenés par l'ouverture d'introduction ripent vers le bas sur cette section de grille, et une deuxième section de grille (44), se raccordant, en s'étendant obliquement vers le haut, à la première section de grille (42), pour constituer la butée.

2. Dispositif de broyage selon la revendication 1, caractérisé en ce que la deuxième section de grille (44) forme avec la première section de grille (42) un angle d'à peu près 90°.

3. Dispositif de broyage selon la revendication 1 ou 2, caractérisé en ce que l'axe de rotation (32) de l'outil (24 à 30) est disposé sensiblement au-dessus de la grille (38).

4. Dispositif de broyage selon l'une des revendications précédentes, caractérisé en ce que la grille (38) est reliée au moins à deux parois latérales (4, 6) opposées du carter (2).

5. Dispositif de broyage selon l'une des revendications 2 à 4, caractérisé en ce qu'à la deuxième section de grille (44) se raccorde une troisième section de grille (46), qui s'étend vers la paroi latérale (6), opposée à l'ouverture d'introduction (34), du carter (2).

6. Dispositif de broyage selon l'une des revendications précédentes, caractérisé en ce que les barres de grille (40) sont pourvues de jambes inférieures (48, 50) supplémentaires.

7. Dispositif de broyage selon l'une des revendications précédentes, caractérisé en ce que le au moins un outil (24 à 30) pénètre au moins partiellement dans la grille (38) lors de sa rotation.

8. Dispositif de broyage selon l'une des revendications précédentes, caractérisé en ce que l'outil (24 à 30) est incurvé sur sa face (54), située à l'avant en observant dans le sens de rotation (A), de manière que, lorsque la rotation progresse, le point d'attaque (P) se déplace de plus en plus radialement vers l'extérieur.

9. Dispositif de broyage selon l'une des revendications précédentes, caractérisé en ce que plusieurs outils (24 à 30) sont disposés sur un axe de rotation (32) commun.

10. Dispositif de broyage selon l'une des revendications précédentes, caractérisé en ce que chaque outil est réalisé sous forme d'outil double (24 à 30), en s'étendant, d'une seule pièce, dans des directions radialement opposées.

11. Dispositif de broyage selon les revendications 9 et 10, caractérisé en ce que quatre outils double (24 à 30) sont fixés sur un arbre commun (18).

12. Dispositif de broyage selon l'une des revendications précédentes, caractérisé en ce que la largeur d'interstice existant de part et d'autre entre l'outil (24 à 30) et des barres de grille (40) voisines est inférieure à 10 mm, de préférence comprise entre 3 et 5 mm.
